# EUROPÄISCHE PATENTANMELDUNG

(11) **EP 2 433 695 A1**
(43) Veröffentlichungstag der Anmeldung: **28.03.2012**
(21) Anmeldenummer: 11007449.9
(22) Anmeldetag: 13.09.2011
(51) Int. Cl.: B01D 39/16, D04H 13/00

(54) **Mehrlagiger Filteraufbau**

(30) Priorität: 27.09.2010 DE 102010046567
(71) Anmelder: Sandler AG, 95126 Schwarzenbach/Saale (DE)
(72) Erfinder:

(57) **Zusammenfassung**

Die Erfindung betrifft einen mehrlagigen Filteraufbau zur Entstaubung von Fluiden, bei dem in Richtung von der Anströmseite zur Abströmseite mindestens eine Vorfilterlage, mindestens eine Feinstaubfilterlage und mindestens eine Stützlage hintereinander angeordnet sind. Kennzeichnend ist dabei, dass mindestens eine Vorfilterlage aus einem schmelzgeblasenen Vliesstoff gebildet wird, dessen Filamente in Form von nicht miteinander verbundenen Filamenten vorliegen und dessen Filamentstärken kleiner 15µm betragen.

## Beschreibung

Zu Erhöhung der Effizienz von Filtermedien, wie beispielsweise Filtereinheiten in stationären oder mobilen Entstaubungsanlagen oder auch in raumlufttechnischen Anlagen wurden in der Vergangenheit viele Anstrengungen unternommen, die Staubaufnahme zu erhöhen und damit einhergehend auch die Standzeit zu verlängern.

Aus dem Stand der Technik sind mehrlagige Aufbauten bekannt, die prinzipiell folgende Abfolge der einzelnen Lagen beginnend von der Anströmseite aufweisen:
- Vorfilter zu Speicherung grober Staubpartikel
- Feinfilter aus zur Speicherung feiner Staubpartikel
- Stützlage zur Gewährleistung der mechanischen Stabilität

Für den Feinfilter kommen im Allgemeinen handelsübliche Meltblown-Vliesstoffe zum Einsatz. Die Stützlagen werden meist von einem Spinnvlies gebildet.

Der Vorfilter muss für die Gewährleistung der Speicherung grober Staubpartikel über eine entsprechende Dicke verfügen, sodass genug Volumen zur Speicherung von Staub zur Verfügung steht.

Es ist daher üblich, vor den Feinfilter kardierte Vliesstoffe aus Polypropylen- oder Polyesterfaser zur Speicherung zu setzen. Nachteilig ist dabei der Umstand, dass diese Materialien in einem vorgeschalteten Arbeitsgang zunächst hergestellt werden müssen bevor sie mit dem eigentlichen Feinfilter kombiniert werden. Diese Vorfilter weisen zwar eine gute Staubspeicherfähigkeit auf, scheiden aber Staub nur bis zu einer minimalen Partikelgröße von ungefähr 10µm ab. Feinere Partikel passieren diese Schicht im Allgemeinen ohne davon berührt zu werden und belasten dadurch die nachfolgende Feinfilterschicht.

In der Vergangenheit wurde eine Reihe von Anstrengungen unternommen, Vorfilterschichten bereitzustellen die sowohl eine ausreichende gute Staubspeicherfähigkeit aufweisen als auch Abscheidevermögen für Staubpartikel mit einem Durchmesser von kleiner 10µm.

Dazu wurden normale Filtrations-Meltblowns mit einer mittleren Faserstärke um 1-2µm derartig modifiziert, das in die eher flache, 2-dimensionale Struktur eines Meltblowns durch das Einbringen von grobfasrigen Stützelementen der Warenausfall in Richtung dreidimensional verändert wird. Ein mit diesen Merkmalen ausgestattetes der Filter hat eine geringere Dichte und weist ein erhöhtes Staubspeichervermögen auf.

Gattungsbildend beschreibt die US 4118531 beispielsweise, dass während der Herstellung eines Meltblown-Materials in den Strom aus Meltblown-Mikrofasern gekräuselte Stapelfasern eingeblasen werden. Problematisch dabei ist die genaue Verteilung der Stapelfasern innerhalb innerhalb des Mikrofaservliesstoffes. Hier kann es immer wieder zur "Nestbildung" kommen, was die Gleichmäßigkeit und die Effizienz des Gesamtaufbaus nachteilig beeinflusst.

Die DE 19953717 beschreibt eine weitere Möglichkeit. Dabei werden während der Meltblownherstellung gezielt aneinanderhängende MB-Faserfilamente, sogenannte Multi-Mikrofilamentstränge erzeugt. Diese Stränge liegen gitterartig im fertigen Meltblown übereinander und erzeugen so einen höheren Bausch. Nachteilig ist auch hier, dass zur Erzeugung höherer Dicken eine große Anzahl der Multi-Mikrofilamenstränge erzeugt werden muss, was zu Lasten der Effizienz geht, da die in den Multimikrofilamentsträngen gebundenen Einzelfilamente für die Filtration nicht mehr bereitstehen.

Einen ähnlichen Weg verfolgt die EP 0960645 A2. Sie offenbart einen mehrlagigen Staubsaugerfilterbeutel mit verbesserter Staubabscheidewirkung. Für die Vorfilterlage werden verschiedene Materialien beschrieben, neben anderen auch ein sogenannter High-Bulk Meltblown-Vliesstoff. Der hohe Bausch wird über die Erzeugung von Meltblown-Filamenten mit hohen Faserdurchmessern erzielt. Bei der Herstellung von Meltblowns ergeben sich Faserdurchmesser, deren Verteilung bei grafischer Auswertung an die Form einer Gauß'schen-Glocken-Verteilung ähnelt. Die erzeugten Faserdurchmesser streuen dabei um den erzielten Mittelwert. Will man nun, wie in EP 960645 vorgeschlagen, größere Faserdurchmesser erzeugen, so verschiebt sich die gesamte Verteilung in Richtung der gewünschten Faserstärke. Die EP 960645 schreibt, dass Faserdurchmesser im Bereich von 10 bis 12µm bevorzugt angestrebt werden. Diese Faserdurchmesser liegen bereits im Bereich konventioneller, kardierter Stapelfaservliese, sodass zwar die Staubspeicherfähigkeit verbessert ist, dies aber zu Lasten der Abscheidung feiner Staubpartikel, speziell von Größen <5µm geht. Ein nachgeschaltetes Feinfiltermaterial wird dadurch nicht entlastet.

Es besteht daher die Notwendigkeit, einen Filteraufbau bereitzustellen, welcher die vorgenannten Nachteile des Standes der Technik vermeidet.

Die Aufgabe wird gemäß den Merkmalen des Anspruches 1 gelöst. Sinnvolle Ausgestaltungen sind den Unteransprüchen zu entnehmen.

Die aus dem Stand der Technik bekannten Materialien lösen das Problem der geringen Staubspeicherfähigkeit durch Erhöhen des Volumens bei gleichbleibendem Flächengewicht. Wie beschrieben wird durch das Einbringen / Erzeugen von mechanisch stabilen Anteilen, wie groben Filamenten, Stapelfasern oder das Zusammenklumpen von Filamentsträngen die Dichte des Meltblown-Filtermaterials verringert.

Der Begriff Faserfilamentstärken oder Faserstärken wird im nachfolgenden synonym verwendet. Er steht für den Durchmesser eines einzelnen Polymerstranges, unabhängig davon, ob dieser als Filament oder als endliche Faser vorliegt. Der Durchmesser wird vereinfachend als rund angenommen. Ermittelt wurde dieser durch einfaches Vermessen unter Zuhilfenahme eines Mikroskopes mit entsprechender Messoptik. Er wird in Mikrometern, Abkürzung µm angegeben.

Ist von Faserstärkenverteilung die Rede, so wurden diese anhand einer Messreihe von 100 Einzelmessungen erstellt. Als Standard für die Klassenbreite innerhalb der hier gezeigten Häufigkeitsdiagramme wurde 1µm festgelegt. In den Diagrammen ist in der Y-Achse die Anzahl gefundener Faserfilamente mit einem in die jeweilige, auf der X-Achse abgetragene Faserstärkenklasse zu sehen.

Betrachtet man die Faserstärkenverteilung derartiger, dem Stand der Technik entsprechender, voluminöser Meltblowns, so erinnert diese im Wesentlichen an eine Gauß-Glocken-Verteilung, wobei, wenn gemäß den Lösungswegen von DE19953717 oder US4118531 gearbeitet wird, zwei von einander unabhängige Verteilungen gefunden werden können.

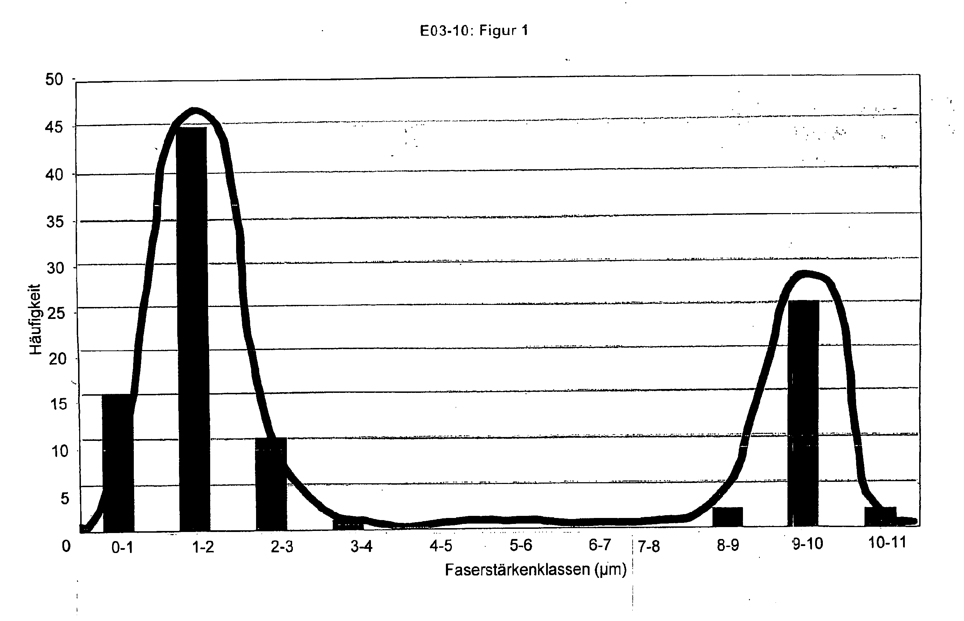

Figur 1 soll das verdeutlichen. Gezeigt wird die Faserstärkenverteilung für ein derartiges Meltblown. Auf der X-Achse sind die einzelnen Klassen für den Faserdurchmesser in µm angeben, die Y-Achse zeigt die Häufigkeit der gefundenen Durchmesser innerhalb einer Klasse. Von links mit der kleinsten Klasse beginnend ist zunächst die Faserstärkenverteilung des eigentlichen Meltblowns zu erkennen. Danach folgt am rechten Ende der Grafik eine weitere Verteilungskurve, erzeugt durch die eingebrachten / erzeugten Stützelemente mit höheren Durchmessern.

Der mittlere Faserdurchmesser des eigentlichen Meltblowns ist dabei dem zu erwartenden Staubpartikelgrößen angepasst.

Ausnahme davon ist lediglich das in EP 960645 beschriebene High-Bulk-Meltblown, welches keine doppelte Verteilung hat, allerdings ist der Mittelwert der gefundenen Faserstärkendurchmesser deutlich in Richtung grober Faseranteile verschoben, sodass ein sogenanntes High-Bulk-Meltblown wie vorerwähnt eher einem kardierten Vlies gleicht und eine geringe Filtrationseffizienz gegenüber feinen Partikeln aufweist.

Die vorliegende Erfindung verfolgt einen anderen Ansatz.

Wie vorerwähnt, zeigen die Faserstärkenverteilungen bekannter Meltblowns eine Glockenkurve. Um einen Mittelwert herum streuen die Faserstärken, wobei die Faserstärkenklassen direkt am Mittelwert am meisten besetzt sind, je weiter man sich vom Mittelwert nach oben oder unten entfernt, umso geringer ist die Besetzung einer Klasse. Zum Erreichen einer guten Staubabscheidung wird der mittlere Faserdurchmesser der erwarteten Hauptpartikelfraktion des Staubes angeglichen.

Bei einem erfindungsgemäß ausgeführten Meltblown sind dagegen die einzelnen Faserstärkenklassen nahezu gleichmäßig, das bedeutet mit ähnlichen Häufigkeiten besetzt. Die Verteilung ist nicht der Hauptfraktion der Partikel angeglichen und folgt nicht mehr einer Glockenkurve.

Die grafische Darstellung der Faserstärkenverteilung gleicht in ihrem Aussehen einer stetigen Gleichverteilung. Der Begriff "stetige Gleichverteilung" im Sinne der vorliegenden Erfindung steht synonym für das Merkmal der gleichmäßigen Besetzung der einzelnen Faserstärkenklassen über einen großen Faserstärkenbereich.

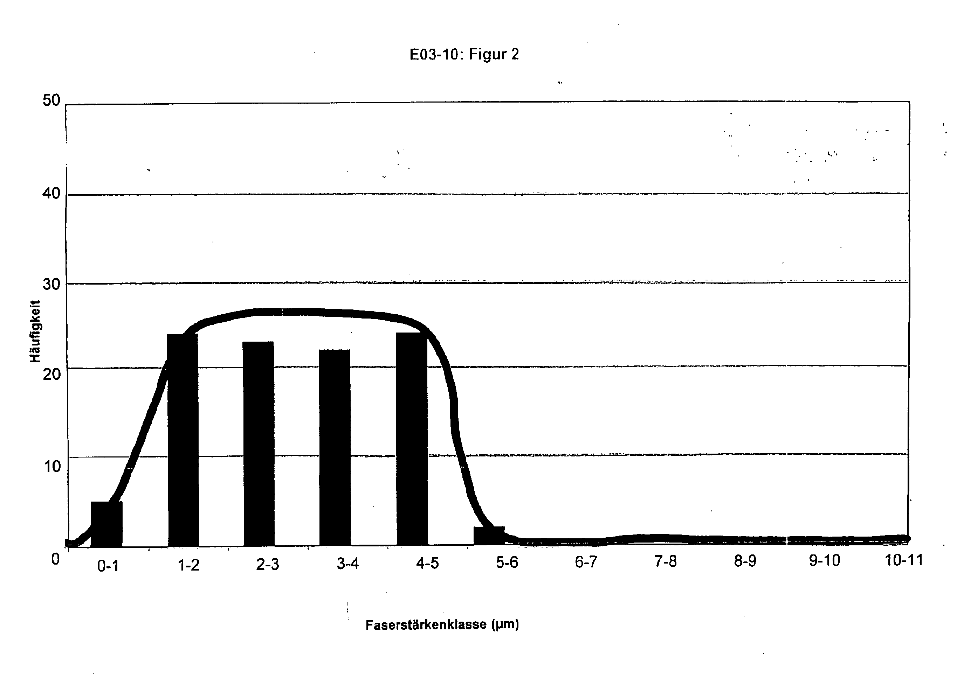

Dies ist in Figur 2 dargestellt.

Ein erfindungsgemäßes Meltblown hat keine bevorzugt vorhandene mittlere Faserstärke sondern zeichnet sich durch die gleichmäßige Besetzung der einzelnen Faserstärkenklassen über einen großen Faserstärkenbereich aus.

Dadurch ist es möglich, sowohl als auch eine ausreichende Staubspeicherfähigkeit und mechanische Stabilität zu gewährleisten.

Im Vergleich zu den aus dem Stand der Technik verfügt es über einen hohen Anteil an Fasern mit geringem Durchmesser daher über eine verbesserte Abscheide-Effizienz speziell gegenüber feinen Stäuben mit Partikelgrößen <5µm. Durch die ebenfalls auch in hohen Anteil enthaltenen Fasern mit hohem Faserdurchmesser ergibt sich durch deren Rückstellkraft eine ausreichende Dichte, sodass die Staubspeicherfähigkeit als auch voluminös genug.

Erreicht wird dies durch die Tatsache, dass die aus thermoplastischen Polymeren wie beispielsweise Polypropylen, Polyamid oder Polyester gebildeten Meltblownfilamente kontrolliert ausgesponnen und abgekühlt werden. Durch die Wahl entsprechender Einstellungen der Sekundärluft im Meltblownprozess werden die ersponnen Filamente nicht mehr unkontrolliert, und daher zufällig verstreckt sondern ergeben die erfindungsgemäße Verteilung der Faserstärkendurchmesser. Dabei wird insbesondere das Zusammenklumpen von Einzelfilamenten zu den aus dem Stand der Technik bekannten Multimikrofilamentsträngen vermieden.

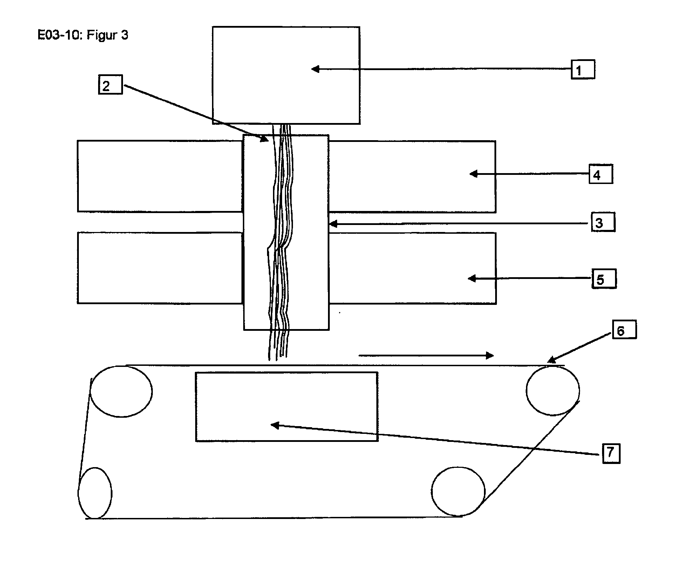

Figur 3 zeigt einen möglichen Weg für die Herstellung eines erfindungsgemäßen Meltblown-Vliesstoffes. Die von der Meltblowndüse (1) erzeugten Meltblownfilamente (2) werden kurz nach dem Austritt aus der Meltblowndüse (1) in einen an den Seiten geschlossenen Kühlschacht (3) geführt.

Der Kühlschacht (3) besteht aus mehreren Kühlzonen, in Figur 3 als (4) und (5) bezeichnet, wobei jede der Zonen über eine eigene Luftkonditionierung verfügt. Der Kühlschacht (3) wird durch das seitliche Anbringen von Verkleidungen geschlossen, sodass das Eindringen von Fremdluft vermieden wird. Dies ermöglicht die kontrollierte Verstreckung und Abkühlung der gebildeten Meltblown-Filamente (2)

Die in den aufeinanderfolgenden Kühlzonen eingeblasene Luft, in der Literatur auch als Sekundärluft bezeichnet, kühlt und verstreckt die Meltblownfilamente (2) bis zur Ablage auf das Siebband (6) kontrolliert. Dadurch ist es möglich, die in der Meltblowndüse (1) entstandenen Einzelfilamente erfindungsgemäß so zu verstrecken, dass beispielsweise im Filamentstärkenbereich von 1 bis 5µm die Verteilung der Filamentstärken in Form einer stetigen Gleichverteilung vorliegt.

Wichtig ist dabei der deutliche Temperaturunterschied, im Ausführungsbeispiel von bis zu 245°C zwischen Primär- und Sekundärluft. Nur durch das rasche und kontrolliert stattfindende Abkühlen der Meltblownfilamente ist ein gleichmäßiges Ausspinnen möglich, sodass die gewünschte Verteilung der Faserfilamentstärken, wie in Figur 2 dargestellt, erzielt werden kann.

Diese vorerwähnte Temperaturdifferenz verhindert das Zusammenklumpen von Einzelfilamenten, sodass die in Figur 1 dargestellte "Doppelverteilung" vermieden wird. Im Gegenteil, es werden nahezu alle vorhanden Klassen innerhalb der Faserstärkenverteilung gleichmäßig besetzt. Dies im deutlichen Unterschied zum Stand der Technik, insbesondere zur DE19953717 und der EP960645.

Durch die Einstellung der weiteren Prozessparameter Extruderdurchsatz und Abzugsgeschwindigkeit kann das Flächengewicht und daher auch die Dicke des Materials gesteuert werden. Auch die Länge der einzelnen Kühlzonen ist von Bedeutung. Als geeignet haben sich Längen der Kühlzone (4) von 40 bis 80cm, bevorzugt von 50-70cm erwiesen. Die Länge der Kühlzone (5) liegt im Bereich einer Länge von 80-120, bevorzugt 100 bis 110 cm.

Die vorbeschriebenen Einstellungen ermöglichen das Herstellen von erfindungsgemäßen Vorfiltermaterialien im Bereich von 20 bis 500 g/qm, wobei sich als bevorzugt ein Gewichtsbereich von 40 bis 250g/qm und besonders bevorzugt ein Bereich von 50 bis 150 g/qm angestrebt wird. Angestrebt werden dabei Dicken des Vorfiltermaterials im Bereich von 0,5 bis 20mm.

Aufgrund der fehlenden Filamentverklumpungen und der dadurch fehlenden Innenverfestigung hat ein erfindungsgemäßes Material keinerlei mechanische Stabilität. Bei der Herstellung hat sich daher die direkte Ablage des erfindungsgemäßen Vorfiltermaterials auf das Feinfiltermaterial bewährt.

Das Feinfiltermaterial wird nach konventionellen Meltblownverfahren hergestellt, wobei sich die dabei angestrebten Faserfilamentstärken an den Partikeldurchmessern der feinsten Staubfraktion bzw. der zu erreichenden Filterklasse orientieren. Die zum Einsatz kommenden Gewichte liegen dabei im Bereich von 5 bis 100g/qm bei mittleren Faserstärken zwischen 0,5 und 10µm

Als Trägermaterial, welches die Kombination aus Feinfilter und Vorfilter mechanisch weiter stabilisiert, können handelsübliche Spinnvliese oder Stapelfaservliese zum Einsatz kommen. Diese können beispielsweise aus Polypropylen, im Flächengewichtsbereich von 10 bis 200 g/qm, bevorzugt von 20 bis 100 g/qm bestehen.

Ein erfindungsgemäß ausgeführtes Vorfiltermaterial weist daher eine ausreichende Staubspeicherfähigkeit gegenüber Grobstaub auf, bedingt durch die auch in hohem Maße enthaltenen Filamente mit geringen Stärken filtert es aber auch Feinstäube und entlastet daher einen nachgeschalteten Feinfilter deutlich.

Tabelle 1 verdeutlicht dies nochmals. Für ein erfindungsgemäß hergestelltes Vorfiltermaterial kann ein handelsübliches Polypropylengranulat mit Schmelzflussindex (MFI) von 400 bis 2000 g/10min, vorzugsweise von 1200 g/10min eingesetzt werden. Durch die in Figur 2 gezeigte Verteilung der Filamentstärken hat das erfindungsgemäße Vorfiltermaterial bei gleichem Flächengewicht eine deutlich höhere Dicke.

Setzt man ein derartiges Vorfiltermaterial in einem mehrschichtig aufgebauten Filter der eingangs beschriebenen Art ein, so lassen sich im Vergleich zum Stand der Technik deutlich verbesserte Standzeiten erreichen.

Tabelle 2 zeigt den direkten Vergleich eines mehrschichtigen Filteraufbaus, wobei für die Stützlage und die Feinfilterlage jeweils die gleichen Materialien verwendet wurden. Lediglich die Vorfilterlage wurde einmal erfindungsgemäß und im Vergleichsbeispiel gemäß den Merkmalen der DE19953717 ausgeführt. Der so hergestellte Aufbau findet Verwendung in einem sogenannten Taschenfilter.

Die dabei erreichte Filterklasse bzw. Abscheideleistung beim Test gemäß DIN EN779:2002 liegt erwartungsgemäß in der gleichen Klasse, betrachtet man jedoch die durch Einsatz des erfindungsgemäßen Vorfilters erreichte Staubeinlagerung, so liegt diese um 80% über dem Stand der Technik. Ebenso verhält es sich mit dem Druckanstieg, bei gleicher Staubbeladung liegt der Druckanstieg um mehr als 50% unter dem Stand der Technik.

Um gerade im Taschenfilterbereich die Staubaufnahme weiter zu verbessern kann im erfindungsgemäßen Filteraufbau eine weitere, der erfindungsgemäßen Vorfilterlage vorgeschaltete, weitere Vorfilterlage eingesetzt werden. Diese kann beispielsweise aus kardierten Stapelfaservliesstoffen aber auch aus Extrusionsvliesstoffen gebildet sein.

Die Zur Anwendung kommenden Flächengewichte, Faserstärken und Materialdicken sind dabei an die zu erwartenden Belastungen, speziell im Hinblick auf den zu Grobstaub anzupassen. Bevorzugt kommen hier Stapelfaservliese mit einem Flächengewicht von 30 bis 100g/qm und einer Dicke von 2 bis 8mm zum Einsatz.

Neben dem reinen Einsatz von Granulaten ist es auch möglich, dem Ausgangspolymer Additive zuzusetzen, welche die Verwendungseigenschaften beeinflussen können.

In weiteren bevorzugten Ausführungsformen haben sich haben sich im Bereich der industriell im Einsatz befindlichen Taschenfiltermaterialien hydrophilierende Zusätze aus der Reihe oberflächenaktiver Substanzen wie Tensiden als günstig erwiesen.

Diese Zusätze in Verbindung mit dem erfindungsgemäß ausgeführten Vorfiltermaterial bringen nochmals ein verbessertes Staubspeichervermögen im Vergleich zu Materialien die dem Stand der Technik entsprechen.

Auch der Zusatz von antimikrobiellen Zusatzstoffen, beispielsweise auf Silberbasis oder desodorierenden Mittel, beispielsweise sogenannter Zeolithe ist für den Einsatz im Bereich mobiler Staubsammelgeräte machbar.

### Bezugszeichenliste:

- 1 =: Meltblowndüse
- 2 =: Meltblownfilamente
- 3 =: Kühlschacht
- 4 =: Kühlzone I
- 5 =: Kühlzone II
- 6 =: Siebband
- 7 =: Vakuumeinheit

**Tabelle 1:**

| | **Erfindungsgemäßes Vorfiltermaterial** | **Vorfiltermaterial gem. Stand der Technik aus** DE19953717 |
|---|---|---|
| **Polymer** | **Polypropylen** | **Polypropylen** |
| **MFI (g/10min bei 2,16kg)** | 1200 | 1200 |
| **Materialdicke (mm, WSP 120.6 (09))** | 4 | 2 |
| **Flächengewicht (g/m², WSP 130.1(09))** | 60 | 60 |
| **Abstand Düsenaustritt / Auftreffpunkt (cm)** | 160 | 80 |
| **Länge Kühlzone (4) (cm)** | 60 | -- |
| **Länge Kühlzone (5) (cm)** | 100 | -- |
| **Temperatur der Primärluft an der Meltblowndüse (1) in °C** | 260 | 260 |
| **Temperatur der Sekundärluft innerhalb der ersten Kühlzone (4) in °C** | 15 | -- |
| **Temperatur der Sekundärluft innerhalb der zweiten Kühlzone (5) in °C** | 20 | -- |

**Tabelle 2:**

| | **Erfindungsgemäßer Filteraufbau** | **Filteraufbau unter Verwendung von Filtermaterial gem.** DE19953717 |
|---|---|---|
| **Aufbau** | Vorfilterschicht: erfindungsgemäßes Material aus Tabelle 1 | Vorfilterschicht: Stand der Technik gemäß Tabelle 1 |
| | Feinfilterschicht: Meltblown aus Polypropylen, 30 g/m², Dicke 1 mm, mittlere Filamentstärke 2µm | Feinfilterschicht: Meltblown aus Polypropylen, 30 g/m², Dicke 1mm, mittlere Filamentstärke 2µm |
| | Stützlage: Spinnvlies aus Polypropylen, 20 g/m² | Stützlage: Spinnvlies aus Polypropylen, 20 g/m² |
| **Gesamtdicke (in mm, WSP 120.6 (09))** | 7 | 5 |
| **Abscheideleistung / Filterklasse (DIN EN779:2002)** | F7 | F7 |
| **Staubeinlagerungsvermögen (in %,DIN EN779:2002)** | 300 | 200 |
| **Gesamtflächengewicht (in g/m², WSP 130.1(09))** | 110 | 110 |
| **Druckanstieg während Bestaubung mit 30g AHSRAE-Normstaub (in Pa, DIN EN779:2002)** | 3 | 7 |

## Patentansprüche

1. Mehrlagiger Filteraufbau zur Entstaubung von Fluiden, bei dem in Richtung von der Anströmseite zur Abströmseite mindestens eine Vorfilterlage, mindestens eine Feinstaubfilterlage und mindestens eine Stützlage hintereinander angeordnet sind,
**dadurch gekennzeichnet,**
**dass** mindestens eine Vorfilterlage aus einem schmelzgeblasenen Vliesstoff gebildet wird, dessen Filamente in Form von nicht miteinander verbundenen Filamenten vorliegen und dessen Filamentstärken kleiner 15µm betragen.

2. Mehrlagiger Filteraufbau nach Anspruch 1,
**dadurch gekennzeichnet,**
**dass** die Häufigkeitsverteilung der Filamentdurchmesser innerhalb der schmelzgeblasenen Vorfilterlage im Wesentlichen einer stetigen Gleichverteilung entspricht.

3. Mehrlagiger Filteraufbau nach einem der vorhergehenden Ansprüche"
**dadurch gekennzeichnet,**
- **dass** der mittlere Faserdurchmesser der schmelzgeblasenen Vorfilterlage kleiner 10µm beträgt.

4. Mehrlagiger Filteraufbau nach einem der vorhergehenden Ansprüche,
**dadurch gekennzeichnet,**
- **dass** der mittlere Faserdurchmesser der schmelzgeblasenen Vorfilterlage kleiner 5µm beträgt.

5. Mehrlagiger Filteraufbau nach einem der vorhergehenden Ansprüche,
**dadurch gekennzeichnet,**
**dass** die Stützlage aus einem Stapelfaservliesstoff oder einem Extrusionsvliesstoff gebildet wird.

6. Mehrlagiger Filteraufbau nach einem der vorhergehenden Ansprüche,
**dadurch gekennzeichnet,**
**dass** das Flächengewicht der schmelzgeblasenen Vorfilterlage im Bereich von 20 bis 500 g/qm liegt.

7. Mehrlagiger Filteraufbau nach einem der vorhergehenden Ansprüche,
**dadurch gekennzeichnet,**
**dass** das Flächengewicht der Feinstaubfilterlage im Bereich von 5 bis 100g/qm liegt.

8. Mehrlagiger Filteraufbau nach einem der vorhergehenden Ansprüche,
**dadurch gekennzeichnet,**
**dass** das Flächengewicht der Stützlage im Bereich von 10 bis 200 g/qm liegt.

9. Mehrlagiger Filteraufbau nach einem der vorhergehenden Ansprüche,
**dadurch gekennzeichnet,**
**dass** die Dicke der schmelzgeblasenen Vorfilterlage zwischen 0,5 und 20 mm liegt.

10. Mehrlagiger Filteraufbau nach einem der vorhergehenden Ansprüche,
**dadurch gekennzeichnet**,
die schmelzgeblasene Vorfilterlage , die Feinstaubfilterlage und die Stützlage aus thermoplastischen Polymeren gebildet werden.

11. Mehrlagiger Filteraufbau nach einem der vorhergehenden Ansprüche,
**dadurch gekennzeichnet,**
**dass** die die schmelzgeblasenen Vorfilterlage und/oder die Feinstaubfilterlage bildenden Filamente mit einem die elektrostatische Aufladung begünstigenden Additiv versehen sind.

12. Mehrlagiger Filteraufbau nach einem der vorhergehenden Ansprüche,
**dadurch gekennzeichnet,**
**dass** die die schmelzgeblasene Vorfilterlage und/oder die Feinstaubfilterlage bildenden Filamente mit einem antimikrobiell wirksamen Additiv versehen sind.

13. Mehrlagiger Filteraufbau nach einem der vorhergehenden Ansprüche,
**dadurch gekennzeichnet,**
**dass** die die schmelzgeblasene Vorfilterlage und/oder die Feinstaubfilterlage bildenden Filamente mit einem die Hydrophilie begünstigenden Additiv versehen sind.

14. Mehrlagiger Filteraufbau nach einem der vorhergehenden Ansprüche,
**dadurch gekennzeichnet,**
**dass** die die schmelzgeblasene Vorfilterlage und/oder die Feinstaubfilterlage bildenden Filamente mit einem desodorierenden Additiv versehen sind.

15. Mehrlagiger Filteraufbau nach einem der vorhergehenden Ansprüche,
**dadurch gekennzeichnet,**
**dass** anströmseitig vor der schmelzgeblasene Vorfilterlage eine weitere Vorfilterlage angeordnet ist, welche aus einem kardierten Stapelfaservliesstoff gebildet wird.

16. Mehrlagiger Filteraufbau nach einem der vorhergehenden Ansprüche,
**dadurch gekennzeichnet,**
**dass** anströmseitig vor der schmelzgeblasene Vorfilterlage eine weitere Vorfilterlage angeordnet ist, welche aus einem Extrusionsvliesstoff gebildet wird.

17. Staubfilterbeutel,
**dadurch gekennzeichnet,**
**dass** seine Wandung aus einem mehrlagigen Filtermaterial nach einem der Ansprüche 1 bis 16 besteht.

18. Taschenfilterbeutel,
**dadurch gekennzeichnet,**
**dass** seine Wandung aus einem mehrlagigen Filtermaterial nach einem der Ansprüche 1 bis 16 besteht.

19. Plissierter Filter,
**dadurch gekennzeichnet,**
**dass** seine Wandung aus einem mehrlagigen Filtermaterial nach einem der Ansprüche 1 bis 16 besteht
